# EUROPÄISCHE PATENTANMELDUNG

(11) **EP 1 085 253 A2**
(43) Veröffentlichungstag der Anmeldung: **21.03.2001**
(21) Anmeldenummer: 00111737.3
(22) Anmeldetag: 02.06.2000
(51) Int. Cl.: F21S 8/10, F21V 8/00

(54) **Leuchte, insbesondere für Kraftfahrzeuge**

(30) Priorität: 14.09.1999 DE 19943821
(71) Anmelder: VALEO Beleuchtung Deutschland GmbH, 74321 Bietigheim-Bissingen (DE)
(72) Erfinder: Hering, Oliver, 74321 Bietigheim-Bissingen (DE); Lendle, Reiner, 74855 Hassmersheim (DE)
(74) Vertreter: Dreiss, Fuhlendorf, Steimle & Becker, Patentanwälte

(57) **Zusammenfassung**

Die Erfindung betrifft eine Leuchte, insbesondere für Kraftfahrzeuge, mit wenigstens zwei Lichtleitstäben (10), die eine oder mehrere stirnseitige Lichteintrittsflächen (28) und eine oder mehrere Lichtaustrittsflächen (12) entlang der Lichtleitstäbe (10) aufweisen, und mit einer oder mehreren, insbesondere als Leuchtdioden (15) ausgebildeten, den Lichtleitstäben (10) zugeordneten Lichtquellen (14), wobei die Lichtleitstäbe (10) zumindest abschnittsweise nicht parallel zueinander verlaufen.

## Beschreibung

Die Erfindung betrifft eine Leuchte, insbesondere für Kraftfahrzeuge, mit wenigstens zwei Lichtleitstäben, die eine oder mehrere stirnseitige Lichteintrittsflächen und eine oder mehrere Lichtaustrittsflächen entlang der Lichtleitstäbe aufweisen, und mit einer oder mehreren, insbesondere als Leuchtdioden ausgebildeten, den Lichtleitstäben zugeordneten Lichtquellen.

Leuchten mit Lichtleitstäben sind hinreichend bekannt. So ist z.B. aus der DE 41 29 094 A1 eine Signalleuchte für Kraftfahrzeuge bekannt, in welcher mehrere Lichtleitstäbe in paralleler Anordnung zueinander vorgesehen sind. In diese Lichtleitstäbe wird mittels einer Leuchtdiode an einem stirnseitigen Ende Licht eingestrahlt, welches sich über die Länge des Lichtleitstabes verteilt. Auf der der Lichtaustrittsfläche gegenüberliegenden Seite ist der Lichtleitstab mit einer Vielzahl von Prismen versehen, durch die die Lichtstrahlen in Richtung der Lichtaustrittsfläche umgelenkt werden. Durch das Vorsehen mindestens zweier paralleler Lichtleitelemente nebeneinander hinter der Abschlußscheibe soll eine einfache und kostengünstige Konstruktion und Herstellbarkeit einer großflächigen Signalleuchte mit großer Leuchtkraft bei großer Signal- und Warnwirkung und gleichzeitig gleichmäßiger Ausleuchtung bei geringer Stromaufnahme erreicht werden.

Es hat sich gezeigt, dass derartige Leuchten hinsichtlich der Einbaubarkeit und des Designs beschränkt sind, insbesondere können diese Leuchten nicht exakt den Verlauf der Karosserie folgen und sie erfordern daher, insbesondere bei gekrümmtem Karosserieverlauf, einen erhöhten Bauraum.

Ausgehend von der DE 41 29 092 A1 liegt der Erfindung daher die Aufgabe zugrunde, eine Leuchte bereitzustellen, die auch bei gekrümmter bzw. geschwungener Karosserieform nur einen geringen Bauraum benötigt und eine bessere Anpassung der Leuchten an die Karosserieform ermöglicht.

Diese Aufgabe wird durch eine Leuchte der eingangs genannten Art erfindungsgemäß dadurch gelöst, dass die Lichtleitstäbe zumindest abschnittsweise nicht parallel zueinander verlaufen. Eine zumindest abschnittsweise nicht parallele Anordnung der Lichtleitstäbe hat den Vorteil, dass die Lichtleitstäbe annähernd beliebig im Raum angeordnet werden können. Insbesondere bei schrägen oder gekrümmten Fahrzeugflächen können die Lichtleitstäbe exakt der gewünschten Fahrzeugkontur folgen. Die gesamte Leuchte nimmt somit einen geringeren Bauraum ein, da sich die Lichtleitstäbe gleichsam an die Karosserie "anschmiegen".

Weiterhin können durch gezielt nicht parallele Führung der Lichtleitstäbe bestimmte Designeffekte erzielt werden.

Die erfindungsgemäße Leuchte kann als Signalleuchte, als Innenlichtmodul, als Fahrzeugbegrenzungsleuchte oder als Fahrzeugbeleuchtungsanwendung verwendet werden.

Es kann nach einem ersten Ausführungsbeispiel vorgesehen sein, dass die Lichtleitstäbe wenigstens teilweise einen gekrümmten Verlauf aufweisen, d.h. der Lichtleitstab kann durchgehend oder bereichsweise in einer oder verschiedenen Ebenen des Raums gekrümmt sein. Insbesondere kann vorgesehen sein, dass die Lichtleitstäbe in ihrem gekrümmten Bereich nicht parallel und in ihrem nicht gekrümmten Bereich parallel angeordnet sind. Hierdurch wird in einfacher Weise gleichzeitig eine optimale Anpassung der Leuchte an die Fahrzeugkontur und eine möglichst gleichmäßige Lichtverteilung und Ausleuchtung gewährleistet.

Sofern bei den Leuchten z.B. aufgrund ihres Einbaus bzw. ihrer Anordnung am Fahrzeug die Lichteintrittsflächen nicht in einer Ebene liegen, sondern versetzt angeordnet sind, z.B. da dies durch Form der Leuchte erforderlich wird, kann vorgesehen sein, dass die Leuchtdioden über ein Clinch frame mittels der HP-Snap-LED-Technik kontaktiert sind. Dies bietet den Vorteil, dass in Fällen, in denen nicht eine einzige Leiterplatte verwendet werden kann, um darauf alle Leuchtdioden anzuordnen, nicht wie bisher jeder einzelnen Lichtquelle eine eigene Platine zugeordnet werden muss, wobei das Leuchtengehäuse für jede Platine mit einer Aufnahme bzw. Halterung versehen werden muss. Bei der Kontaktierung der Leuchtdioden über einen Clinch frame erfüllt der Clinch frame die Funktion der Leiterplatte, d.h. er stellt gleichzeitig die mechanische Halterung als auch die elektrische Kontaktierung bereit. Die Leuchtdioden (Snap LED's) werden auf den Clinch frame aufgeclinched. Der Clinch frame kann anschließend in beinahe beliebige geometrische Formen geknickt bzw. gebogen werden.

Weiterhin ist es möglich, die Leuchtdioden über 3-D-MID's zu kontaktieren. Die 3-D-MID-Technik weist ebenso wie die vorbeschriebene HP-Snap-LED-Technik den Vorteil auf, dass die Anordnung der LED's in einer Ebene nicht mehr erforderlich ist, da sich sowohl die Clinch frames als auch die MID's in nahezu allen Formen herstellen lassen. MID's (Molded Interconnect Devices) werden im Spritzgussverfahren hergestellt, wobei die thermoplastischen Teile integrierte Schaltkreise aufweisen.

Durch die Verwendung einer der beiden Techniken ergeben sich bei der Gestaltung der Lichtleiter weitere Freiräume.

Darüber hinaus können die Lichtleitstäbe mit verschiedenen optischen Mitteln versehen werden, die das von der Lichtquelle zur Verfügung gestellte Licht so verteilen, dass es an den gewünschten Stellen in einer vorgegebenen Intensität austritt.

So kann z.B. vorgesehen sein, dass im wesentlichen zwischen den Lichteintrittsflächen und den Lichtaustrittsflächen ein Abschnitt der Außenseite der Lichtleitstäbe als Lichtumlenkbereich ausgebildet ist. Eine so ausgebildete Leuchte weist in einem Bereich im wesentlichen vor der Lichtaustrittsfläche einen Lichtumlenkbereich auf, in welchen die auf diesen auftreffenden Lichtstrahlen in einen bezüglich der normalen Umlenkung ohne Lichtumlenkbereich von der Lichteintrittsfläche weiter weg liegenden Abschnitt des Lichtleitstabes abgelenkt werden. Dieser Lichtumlenkbereich dient dazu, die Lichtstrahlen, die vor der Lichtaustrittsfläche auf die Außenseite des Lichtleitstabes auftreffen, derart abzulenken, dass diese in einen weiter hinten liegenden Abschnitt des Lichtleitstabes gelangen. Auf diese Weise wird der Abschnitt des Lichtleitstabes, der der Lichteintrittsfläche näher liegt, mit einer geringeren Strahlendichte angestrahlt, wobei der Abschnitt des Lichtleitstabes, der von der Lichteintrittsfläche entfernter liegt, mit einer höheren Strahlendichte angestrahlt wird. Auf diese Weise wird das austretende Licht wesentlich gleichmäßiger über die Länge des Lichtleitstabes verteilt. Eine derartige Gestaltung einer Leuchte ist in der deutschen Patentanmeldung 198 50 443 beschrieben. Der Lichtumlenkbereich kann dabei derart ausgebildet sein, dass das auf den Lichtumlenkbereich auftreffende Licht reflektiert wird. Das Licht kann dann in einem anderen Bereich des Lichtleitstabes genutzt werden.

Eine Weiterbildung sieht vor, dass die Außenseite des Lichtleitstabes nach dem Lichtumlenkbereich mit einer den Querschnitt des Lichtleitstabes vergrößernden Stufe versehen ist. Diese Ausgestaltung der Außenseite des Lichtleitstabes bewirkt eine Teilabschattung eines sich an den Lichtumlenkbereich anschließenden Abschnitts der Lichtaustrittsfläche. Mit dieser Stufe kann gezielt auf zu helle Abschnitte, in welchen die Strahlendichte zu hoch ist, eingewirkt werden, indem ein Teil dieser Strahlen über die Stufe abgeschattet und über den Lichtumlenkbereich in einen oder mehrere andere Abschnitte der Lichtaustrittsfläche reflektiert wird. Durch den Lichtumlenkbereich werden also Strahlen gezielt in zu dunkle Abschnitte der Lichtaustrittsfläche reflektiert und mit der Stufe werden gezielt zu helle Abschnitte der Lichtaustrittsfläche teilabgeschattet.

Vorteilhaft ist bzw. sind die Flächen des Lichtumlenkbereichs und/oder die Außenfläche der Stufe verspiegelt. Hierdurch wird eine optimale Reflexion des auf diese Bereiche auftreffenden Lichts erzielt.

Insbesondere bei gebogenen bzw. gekrümmten Lichtleitstäben, bei denen eine gleichmäßige Lichtverteilung relativ schwierig zu erreichen ist, kann sowohl über den Lichtumlenkbereich als auch über die Stufe ein Teil des eingestrahlten Lichtes exakt von zu hellen in zu dunkle Bereiche umgelenkt werden.

Es kann vorgesehen sein, dass die Lichteintrittsflächen und/oder die gegenüberliegenden stirnseitigen Flächen als Lichtumlenkbereiche ausgebildet sind. Die Ausgestaltung der Lichteintrittsfläche als Lichtumlenkbereich hat den Vorteil, dass bereits beim Eintritt der Lichtstrahlen in den Lichtleitstab diese derart umgelenkt werden, dass das Licht gezielt in Richtung auf die Lichtaustrittsfläche und/oder auf lichtablenkende Mittel, z.B. auf Prismen, umgelenkt wird, von denen das Licht dann in Richtung der Lichtaustrittsfläche abgelenkt wird und/oder auf die der Lichteintrittsfläche gegenüberliegende stirnseitige Fläche umgelenkt wird. Durch den Lichtumlenkbereich werden also die von der Lichtquelle ausgehenden Lichtstrahlen bereits beim Eintritt in den Lichtleitstab gezielt ausgerichtet. Dadurch werden zum einen die Lichtverluste verringert, zum anderen wird durch die gezielte Ausrichtung der Lichtstrahlen der Weg der Strahlen innerhalb des Lichtleitstabes gezielt gesteuert, so dass unnötige Wege innerhalb des Stabes und somit unnötige Verluste vermieden werden.

Bei einer Ausbildung der der Lichteintrittsfläche gegenüberliegenden stirnseitigen Fläche als Lichtumlenkbereich wird der Vorteil erzielt, dass das den gesamten Lichtleitstab durchwanderte und auf der gegenüberliegenden Stirnseite auftreffende Licht derart umgelenkt wird, dass dieses Licht entweder in Richtung der Lichtaustrittsfläche, wobei hier abhängig vom Auftreffwinkel bewusst ein Licht austritt und/oder eine oder mehrere Totalreflexionen hervorgerufen werden können und/oder das Licht in Richtung der lichtablenkenden Mittel, z.B. Prismen, umgelenkt wird. Somit wird vermieden, dass das Licht wieder zurück auf die Lichteintrittsfläche reflektiert wird. Eine derartige Umlenkoptik kann als Schräge, aber auch als Sammellinse, Streulinse oder Freiformlinse, Zylinderlinse sowie als Paraboloid oder Freiformfläche ausgebildet sein. Eine derartige Ausgestaltung einer Leuchte ist z.B. in der deutschen Patentanmeldung 198 57 561 beschrieben.

Schließlich kann es zur besseren Lichtausnutzung und Verteilung vorgesehen sein, dass die Lichteintrittsflächen gegenüber der Längsachse des Lichtleitstabes geneigt sind. Durch die Neigung der Lichteintrittsfläche des Lichtleitstabes gegenüber dessen Längsachse wird bewirkt, dass die auf die Lichteintrittsfläche auftreffenden Lichtstrahlen nicht nur gebrochen, sondern die gebrochenen Strahlen auch in Neigungsrichtung zusätzlich abgelenkt werden. D.h., die von der Lichtquelle ausgehenden Lichtstrahlen werden aufgrund der Neigung der Lichteintrittsfläche zusätzlich in diese Neigungsrichtung abgelenkt. Hierdurch kann gezielt in den Strahlenverlauf der Lichtstrahlen innerhalb des Lichtleitstabes eingegriffen werden. Insbesondere kann vorgesehen sein, dass die Neigung der Lichteintrittsfläche und die Neigung der Lichtquelle so gewählt sind, dass die Lichtstrahlen innerhalb des Lichtleitstabes wenigstens so verlaufen, wie bei herkömmlichen Lichtleitstäben, die normal angestrahlt werden. Auf diese Weise kann die Lichtquelle geneigt, d.h. schräg angeordnet werden, wobei der Verlauf der Lichtstrahlen innerhalb des Lichtleitstabes durch die Neigung der Lichteintrittsfläche korrigiert wird. Durch die Neigung der Lichtquelle bzw. die versetzte Anordnung der Lichtquellen der Lichtleitstäbe zueinander kann auch die Platine, auf der sich die Lichtquellen befinden, geneigt angeordnet werden. Somit ist es nicht erforderlich, dass die Lichteintrittsflächen aller Lichtleitstäbe in einer Ebene senkrecht zur Stablängsachse liegen. Vielmehr können die Enden der Lichtleitstäbe der Neigung der Platine folgen, so dass aufgrund dieser Ausrichtung der Lichtleitstäbe nicht für jede einzelne Lichtquelle eine separate Platine verwendet werden muss. Eine derartige Ausgestaltung einer Leuchte ist aus der 'eutschen Patentanmeldung 199 08 961 bekannt.

Es ist von Vorteil, wenn die Lichtleitstäbe zylindrisch ausgebildet sind, weil sich hierdurch eine einfache und kostengünstige Herstellbarkeit der Lichtleitstäbe ergibt und zudem eine besonders günstige Lichtverteilung erreicht werden kann, da zum einen aufgrund der auftretenden Reflexionen in dem Lichtleitstab eine besonders günstige Verteilung des Lichts in dem Lichtleitstab erreicht wird und zum anderen aufgrqnd der durch die Zylinderform gegebene Lupenwirkung bei Abstrahlung über die Mantelfläche eine besonders große Gleichverteilung der Lichtintensität gewährleistet wird.

Weitere Vorteile, Merkmale und Einzelheiten der Erfindung ergeben sich aus den Unteransprüchen sowie der nachfolgenden Beschreibung, in der unter Bezugnahme auf die Zeichnungen ein Ausführungsbeispiel im Einzelnen beschrieben ist. Dabei können die in der Zeichnung dargestellten und in den Ansprüchen sowie der Beschreibung erwähnten Merkmale jeweils einzeln für sich oder in beliebiger Kombination erfindungswesentlich sein. Dabei zeigen:
- Figur 1: eine perspektivische Darstellung einer Leuchte mit teilweise nicht parallelen Lichtleitern; und
- Figur 2: eine Draufsicht auf die Leuchte gemäß Figur 1.

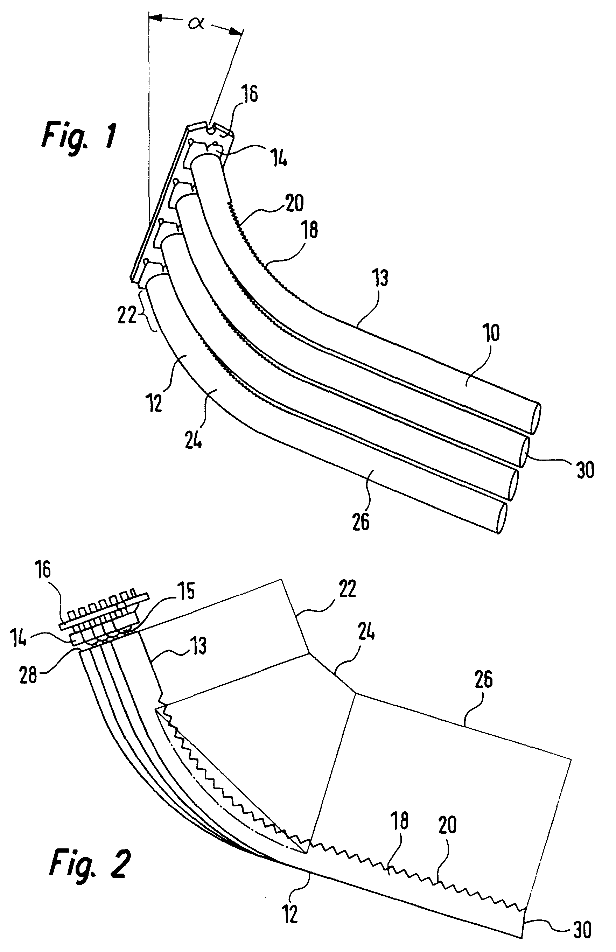

In der Figur 1 sind vier insgesamt mit 10 bezeichnete Lichtleitstäbe dargestellt, wobei die Lichtleitstäbe 10 übereinander angeordnet sind. In der Zeichnung dem Betrachter zugewandt, weisen die Lichtleitstäbe 10 jeweils eine Lichtaustrittsfläche 12 auf, die sich hinter einem Leuchtenglas, welches nicht dargestellt ist, befindet. Jedem Lichtleitstab 10 ist eine Lichtquelle 14 zugeordnet, die von einer Leuchtdiode verkörpert wird. Die Lichtquellen 14 sind auf einer einzigen Leiterplatte 16 angeordnet. Den Lichtaustrittsflächen 12 liegt jeweils ein Bereich 18 mit einer Vielzahl von Prismen 20 gegenüber. An diesen Prismen 20 werden die Lichtstrahlen von den Leuchtdioden kommend reflektiert und in Richtung der Lichtaustrittsflächen 12 umgelenkt.

Die Lichtleitstäbe 10 weisen zunächst von den Lichtquellen 14 aus betrachtet, einen geraden Bereich 22 auf, in dem die vier Lichtleitstäbe 10 parallel zueinander angeordnet sind. An den geraden Bereich 22 schließt sich ein gekrümmter Bereich 24 an, in dem die Lichtleitstäbe 10 nicht parallel zueinander verlaufen. Die Enden der Lichtleitstäbe 10 sind wiederum gerade ausgeführt und in diesem Bereich 26 verlaufen die Lichtleitstäbe 10 wiederum parallel.

Durch diese Formgebung der verschiedenen Lichtleitstäbe zueinander wird erreicht, dass sich die Leuchte besonders gut an die Fahrzeugkontur anschmiegt und somit ein möglichst geringer Bauraum bei möglichst guter und gleichmäßiger Ausleuchtung benötigt wird.

In Figur 2 ist der Verlauf der vier Lichtleitstäbe besonders gut zu erkennen. Das Licht wird von den Lichtquellen 14, die durch Leuchtdioden 15 gebildet sind, über die Lichteintrittsflächen 28 in die Lichtleitstäbe 10 eingespeist. Die vier Lichtleitstäbe 10 verlaufen hierbei im Bereich 22 parallel, wobei auf der den Lichtaustrittsflächen 12 gegenüberliegenden Seiten 13 in diesem Bereich 22, die als Lichtaustrittsfläche 18 dient, keine Prismen angeordnet sind.

Es ist zu erkennen, dass die Lichtleitstäbe 10 im Bereich 22 nicht senkrecht untereinander, sondern leicht versetzt zueinander angeordnet sind, so dass durch die Lichtleitstäbe 10 in diesem Bereich eine schräg verlaufende Fläche gebildet wird, die um den Winkel α gegenüber der Vertikalrichtung geneigt ist (Figur 1).

An diesen Bereich 22 schließt sich dann der gekrümmte Bereich 24 an, wobei die Lichtleitstäbe 10 in diesem Bereich 24 unterschiedliche Krümmungen aufweisen und somit nicht länger parallel zueinander verlaufen.

Am Ende des Bereiches 24 liegen die Lichtleitstäbe 10 dann senkrecht in einer Ebene über- und parallel zueinander. In dieser Anordnung verlaufen die Lichtleitstäbe 10 dann in dem Bereich 26 gradlinig also ungekrümmt weiter und münden in die Stirnflächen 30, die den Lichteintrittsflächen 28 gegenüberliegen.

Durch diesen Verlauf der Lichtleitstäbe können sich diese optimal an die Kanten eines Fahrzeugs anschmiegen und es wird neben einer ansprechenden Optik eine besonders flach bauende Leuchte erreicht.

## Patentansprüche

1. Leuchte, insbesondere für Kraftfahrzeuge, mit wenigstens zwei Lichtleitstäben (10), die eine oder mehrere stirnseitige Lichteintrittsflächen (28) und eine oder mehrere Lichtaustrittsflächen (12) entlang der Lichtleitstäbe (10) aufweisen, und mit einer oder mehreren, insbesondere als Leuchtdioden (15) ausgebildeten, den Lichtleitstäben (10) zugeordneten Lichtquellen (14), **dadurch gekennzeichnet**, dass die Lichtleitstäbe (10) zumindest abschnittsweise nicht parallel zueinander verlaufen.

2. Leuchte nach Anspruch 1, dadurch gekennzeichnet, dass die Lichtleitstäbe (10) wenigstens teilweise einen gekrümmten Verlauf aufweisen.

3. Leuchte nach Anspruch 2, dadurch gekennzeichnet, dass die Lichtleitstäbe (10) in ihrem gekrümmten Bereich (24) nicht parallel und in ihrem nicht gekrümmten Bereich (22, 26) parallel angeordnet sind.

4. Leuchte nach einem der vorstehenden Ansprüche, dadurch gekennzeichnet, dass die Leuchtdioden (15) über einen Clinch frame kontaktiert sind.

5. Leuchte nach einem der vorstehenden Ansprüche, dadurch gekennzeichnet, dass die Leuchtdioden (15) über 3 D-MID's kontaktiert sind.

6. Leuchte nach einem der vorstehenden Ansprüche, dadurch gekennzeichnet, dass im wesentlichen zwischen den Lichteintrittsflächen (28) und den Lichtaustrittsflächen (12) ein Abschnitt der Außenseite der Lichtleitstäbe (10) als Lichtumlenkbereich ausgebildet ist.

7. Leuchte nach Anspruch 6, dadurch gekennzeichnet, daß der Lichtumlenkbereich derart ausgebildet ist, daß das auf den Lichtumlenkbereich auftreffende Licht reflektiert wird.

8. Leuchte nach Anspruch 6 oder 7, dadurch gekennzeichnet, daß die Außenseite des Lichtleitstabes (10) nach dem Lichtumlenkbereich mit einer den Querschnitt des Lichtleitstabes (10) vergrößernden Stufe versehen ist.

9. Leuchte nach einem der Ansprüche 6 bis 8, dadurch gekennzeichnet, daß die Flache des Lichtumlenkbereichs und/oder die Außenfläche der Stufe verspiegelt ist bzw. sind.

10. Leuchte nach einem der vorstehenden Ansprüche, dadurch gekennzeichnet, daß die Lichteintrittsflächen (28) und/oder die gegenüberliegenden stirnseitigen Flächen (30) als Lichtumlenkbereiche ausgebildet sind.

11. Leuchte nach einem der vorstehenden Ansprüche, dadurch gekennzeichnet, daß die Lichteintrittsflächen (28) gegenüber der Längsachse des Lichtleitstabes (10) geneigt sind.
